# EUROPÄISCHE PATENTSCHRIFT

(11) **EP 3 482 385 B1**
(45) Veröffentlichungstag und Bekanntmachung des Hinweises auf die Patenterteilung: **23.08.2023**
(21) Anmeldenummer: 17740694.9
(22) Anmeldetag: 07.07.2017
(51) Int. Cl.: G09B 21/00, G09B 1/18, G09B 1/28

(54) **VORRICHTUNG ZUR DARSTELLUNG VON TASTBAREN ZEICHEN**
DEVICE FOR PRESENTING TANGIBLE SIGNS
DISPOSITIF POUR REPRÉSENTER DES SIGNES TANGIBLES

(30) Priorität: 07.07.2016 AT 506032016
(43) Veröffentlichungstag der Anmeldung: 15.05.2019
(73) Patentinhaber: Technische Universität Wien, 1040 Wien (AT)
(72) Erfinder: TREML, Michael, 1190 Wien (AT); ZAGLER, Wolfgang, 1080 Wien (AT); BUSSE, Dominik, 1020 Wien (AT)
(74) Vertreter: SONN Patentanwälte OG
(86) Internationale Anmeldenummer: PCT/EP2017/067093
(87) Internationale Veröffentlichungsnummer: WO 2018/007589

(56) Entgegenhaltungen:
- CN-U- 2047 456 11U
- DE-T2- 60 300 882
- SU-A1- 1 633 445
- US-A- 2 371 325
- US-A1- 2013 203 022
- US-B1- 6 776 619
- Anonymous: "Lego - Ergänzungsschachteln", , 30. Dezember 1965 (1965-12-30), Seiten 1-1, XP055401824, Gefunden im Internet: URL:http://horst-lehner.mausnet.de/lego/ka talog/gk65/GK65G-2.JPG [gefunden am 2017-08-29]
- Tanja Sovic-Gasser: "Ring-Shaped Portable Braille Device", , 8 April 2017 (2017-04-08), pages 1-1, XP055400541, Retrieved from the Internet: URL:https://www.tuwien.ac.at/fileadmin/t/t -transfer/Dokumente/Erfinderservice/Techno logy_Offers_27.6.12/2017/Technology_Offer_ -_v04_-_2017-04-08-b.pdf [retrieved on 2017-08-23]

## Beschreibung

Die Erfindung betrifft eine Vorrichtung zur Darstellung von tastbaren Zeichen, insbesondere in Braille-Schrift, mit in Gruppen zusammengefassten Tastelementen, wobei ein tastbares Zeichen jeweils aus einer Matrix von tastbaren Punkten besteht, die in zwei nebeneinander angeordnete Punkt-Spalten und zumindest zwei Punkt-Zeilen anordenbar sind, wobei die vier möglichen Kombinationen von zwei tastbaren Punkten von in einer Punkt-Zeile nebeneinander angeordneten tastbaren Punkten jeweils auf einem gemeinsamen Tastelement angeordnet sind, wobei die Tastelemente im Wesentlichen quaderförmig sind und jedes Tastelement vier Seiten- bzw. Tastflächen mit keinem, einem links oder rechts angeordneten tastbaren Punkt oder zwei tastbaren Punkten aufweist, wobei die Tastelemente drehbar gelagert sind und die jeweils in einer Gruppe zusammengefassten Tastelemente auf einer gemeinsamen Drehachse gelagert sind.

Um blinden und hochgradig sehbehinderten Menschen den Zugang zu textlichen Informationen zu ermöglichen, hat sich insbesondere die Nutzung der sogenannten Braille-Schrift etabliert. Bei diesem Schriftsystem wird ein einzelnes Zeichen - üblicherweise Form genannt - mit sechs oder manchmal auch acht erhabenen Tastpunkten, die z.B. mit den Fingern ertastet werden können, verwendet; Ziffern in Braille-Schrift können je nach Darstellungsart auch lediglich zwei Punkt-Zeilen belegen. Die tastbaren Zeichen, insbesondere im Falle der Darstellung von Braille-Schrift, bestehen demnach aus einer Matrix von zwei Punkt-Spalten und von zumindest zwei, vorzugsweise drei oder vier, Punkt-Zeilen.

Der Spaltenabstand zwischen zwei Tastpunkten einer Punkt-Zeile und der Zeilenabstand zwischen zwei Tastpunkten einer Punkt-Spalte ist hierbei gleich groß, wobei der Abstand zum nächsten tastbaren Zeichen (Form) gegenüber dem Abstand zwischen zwei Tastpunkten eines Zeichens größer ausgebildet ist. Auch für den Durchmesser der Tastpunkte sowie deren Höhe bestehen übliche Maße.

Neben der Darstellung auf statischen Medien wie Papier wird Braille-Schrift auch in aktualisierbaren Displays ("refreshable Braille-Displays") realisiert, wodurch der Zugang zu digitalen Informationen in Analogie zu einem Bildschirm ermöglicht wird. Herkömmliche Displays dieser Art, bei denen jeder Punkt einzeln angesteuert wird, stellen allerdings nur eine Textzeile von typisch zwanzig bis achtzig Zeichen dar. Aufgrund der vielen kleinen Teile und der Einzelansteuerung sind diese Displays teuer. Gegenüber optischen Bildschirmen haben solche Braille-Displays weiters den Nachteil, dass sie eine komplexe und anfällige Mechanik beinhalten, um einzelne Punkte einer Form anheben und absenken zu können.

Zwecks Vereinfachung wurden schon unterschiedliche Konzepte entwickelt, von denen bislang allerdings keines die klassische Braille-Textzeile verdrängen konnte. Viele Lösungsansätze setzen dabei auf verformbare Materialien, die etwa elektrochemische oder elektrothermische Reaktionen nutzen.

Ein anderer Vereinfachungsansatz liegt darin, statt eines vollen Displays nur eine einzige oder wenige Formen auf einem bewegbaren Element unterzubringen. Bewegt man dieses über eine Oberfläche, ändern die Formen ihre Gestalt, sodass ein ähnlicher Eindruck wie bei einem vollen Display entstehen soll. Durch die fehlende Gleitbewegung zwischen Finger und Display sind derartige Darstellungen aber schwieriger zu lesen als klassische Braille-Textzeilen.

Eine Vorrichtung der eingangs angeführten Art ist in Form eines Lernwürfels aus CN 204 745 611 U bekannt, bei welchem Kinder durch Verdrehen der Tastelemente jeweils ein unterschiedliches Braille-Schriftzeichen manuell einstellen können.

Zur Vereinfachung und somit Kosteneinsparung ist es insbesondere aus der SU 1633445 A1 bereits bekannt, nicht jeden Punkt einzeln anzusteuern, sondern mehrere Punkte auf einem drehbaren Element zusammenzufassen. Hierbei sind zwei horizontal nebeneinander angeordnete Tastelemente vorgesehen, welche aus achteckigen Prismen bestehen. Die Anzeige eines bestehenden Punktmusters erfolgt bei dieser Vorrichtung durch Drehung der beiden - jeweils eine Punkt-Spalte eines Zeichens darstellenden - Elemente, wobei jede der jeweils acht Seitenflächen eine andere mögliche Punktkombination anzeigt. Derartige achteckige Prismen sind allerdings sperrig und haben sich daher in der Praxis nicht durchgesetzt.

Die US 2013/0203022 A1 zeigt ein Braille-Display mit bewegbaren Aktuatoren, deren diskrete Oberflächen Vorsprünge tragen. Ein Paar von Aktuatoren hat diskrete Flächen, die Teile von Braille-Zeichen tragen, sodass das Paar, wenn es zusammen gelesen werde, ein ganzes Braille-Zeichen darstellen könne.

Die SU 1633445 A1 zeigt eine Vorrichtung zur Reproduktion von Tastinformation, mit einem Paar oktaedrischer Scheiben, die auf einer gemeinsamen Achse installiert sind. Eine ähnliche Vorrichtung zeigt die US 2,371,325 A.

Ziel der vorliegenden Erfindung ist es demzufolge, eine konstruktiv einfache und kostengünstige Vorrichtung der eingangs angeführten Art zu schaffen.

Erfindungsgemäß wird dies dadurch erzielt, dass die Gruppen von Tastelementen in einer im Wesentlichen kreisringförmigen Aufnahmevorrichtung gelagert sind und die in unterschiedlichen Gruppen zusammengefasste Tastelemente unterschiedliche, im Wesentlichen parallele Drehachsen aufweisen, und jeder Reihe von Tastelementen zumindest ein Stellglied zum Verdrehen zugeordnet ist. Die Tastelemente benachbarter Gruppen von Tastelementen, welche jeweils die gleiche Punkt-Zeile eines tastbaren Zeichens darstellen, bilden eine gemeinsame Reihe von Tastelementen. Demnach weist die Vorrichtung zumindest zwei, vorzugsweise drei oder vier, Reihen von Tastelementen auf. Demzufolge wird bei der erfindungsgemäßen Lösung nicht - wie im Stand der Technik - eine unterschiedliche Anzahl an tastbaren Punkten auf zwei nebeneinander angeordneten Elementen dargestellt, d.h. in Punkt-Spalten, aufgeteilt, sondern es wird vielmehr jeweils eine Punkt-Zeile des tastbaren Zeichens von einem Tastelement dargestellt, d.h. ein Tastelement weist demnach - je nach Einstellung - keinen, einen linken, einen rechten Punkt oder zwei tastbare Punkte auf. Über die Kombination von zumindest zwei Tastelementen, vorzugsweise zumindest drei, insbesondere genau drei oder vier Tastelementen, welche jeweils eine Punkt-Zeile eines tastbaren Zeichens darstellen, können somit auf konstruktiv einfache Weise unter Einhaltung der üblichen Abmessungen der Braille-Schrift alle Braille-Formen dargestellt werden.

Hinsichtlich einer einfachen Lagerung und Verstellung der Tastelemente bzw. einer gesamten Gruppe von Tastelementen sind die Tastelemente drehbar gelagert sind, wobei die jeweils in einer Gruppe zusammengefassten Tastelemente auf einer gemeinsamen Drehachse gelagert sind. Somit können vorzugsweise zwei, drei oder vier Tastelemente auf einer einzigen gemeinsamen Achse drehbar gelagert werden, sodass die Teilezahl und somit der Konstruktionsaufwand weiter sinkt.

Da die Gruppen von Tastelementen in einer im Wesentlichen kreisringförmigen Aufnahmevorrichtung gelagert sind, wobei die kreisringförmige Aufnahmevorrichtung vorzugsweise zwei kreisringförmige Trägerscheiben umfasst, zwischen welchen die Tastelemente bzw. Gruppen von Tastelementen aufgenommen sind, ergibt sich eine vorteilhafte Anordnung der Tastelemente im Wesentlichen entlang einer Kreisbahn, sodass die tastbaren Zeichen vorzugsweise auf einer Innenseite des von den Tastelementen definierten Hohlzylinders dargestellt werden. Hierbei erfolgt das Lesen im unteren Teil der im Wesentlichen entlang einer Kreisbahn angeordneten Tastelemente, welche somit einen Hohlzylinder definieren, in einer von herkömmlichen Braille-Displays bekannten üblichen Hand- und Fingerhaltung und Relativbewegung zwischen Finger und Display. Alternativ können die Tastelemente bzw. die Gruppen von Tastelementen auch auf einer ebenen Fläche oder entlang von einer Kreisbahn abweichenden, beliebig gekrümmten Fläche gelagert sein.

Um den Abstand zwischen den auf den kreisringförmigen Trägerscheiben gelagerten Tastelementen bzw. Gruppen von Tastelementen zueinander verstellen zu können, ist es günstig, wenn die kreisringförmige Aufnahmevorrichtung zur verschieblichen Lagerung der Gruppen von Tastelementen in radialer Richtung verlaufende Radial-Führungselemente aufweist. Somit ist es auf einfache Weise möglich, durch ein radiales nach innen Verlagern der Tastelemente den Abstand der Tastelemente zueinander zu verringern bzw. durch eine Verlagerung in radialer Richtung nach außen den Abstand zwischen den Tastelementen zu vergrößern.

Um die Teilezahl weiter zu reduzieren und somit die Herstellungskosten gering zu halten, ist es zudem von Vorteil, wenn als Radial-Führungselemente schlitzförmige Ausnehmungen jeweils zur Aufnahme einer Drehachse einer Gruppe von Tastelementen vorgesehen sind.

Um die Tastelemente einerseits verdrehen zu können, ohne dass benachbarte Tastelemente einander blockieren, andererseits in einem Leseabschnitt jedoch den üblichen Abstand zwischen zwei Braille-Zeichen bzw. Formen herstellen zu können, ist es zweckmäßig, den Abstand zwischen den Tastelementen in dem Leseabschnitt gegenüber einem Einstellabschnitt zu verringern. In diesem Zusammenhang ist es günstig, wenn eine untere Führungsvorrichtung vorgesehen ist, welche mehrere Gruppen an Tastelementen in einem unteren Leseabschnitt nach radial innen verschiebt.

Mit Hilfe der unteren Führungsvorrichtung werden die Tastelemente somit in einem unteren Leseabschnitt nach radial innen verschoben, wodurch sich der Abstand der Tastelemente zueinander verringert und somit auf einfache Weise der gewünschte Abstand zwischen zwei benachbarten Braille-Formen erzielt wird. Sobald die Tastelemente den Leseabschnitt verlassen, kann dieser verringerte Abschnitt wieder rückgängig gemacht werden, sodass benachbarte Tastelemente ohne Gefahr einer gegenseitigen Blockade zueinander verdreht werden können.

Auf konstruktiv einfache Weise wird ein Nach-Innen-Verschieben der Tastelemente im Leseabschnitt erzielt, wenn als untere Führungsvorrichtung eine außenliegende Anlagefläche ausgebildet ist, mit welcher die Tastelemente nach innen verschoben werden.

Um ein Nach-Außen-Verlagern der Tastelemente außerhalb des Leseabschnitts zu erzielen, ist von Vorteil, wenn eine obere Führungsvorrichtung vorgesehen ist, welche zumindest eine Gruppe, insbesondere mehrere Gruppen, an Tastelementen in einem oberen Einstellabschnitt nach radial außen verschiebt.

Sofern die obere Führungsvorrichtung als innenliegende Anlagefläche(n) ausgebildet ist, mit welcher bzw. mit welchen die Tastelemente nach außen verschoben werden, können die Tastelemente auf einfache Weise während der Drehbewegung der Trägerscheiben auf den innenliegenden Anlageflächen der oberen Führungsvorrichtung auflaufen und werden somit nach radial außen verlagert.

Alternativ zu den vorstehend genannten unteren und oberen Führungsvorrichtungen kann eine Radialverschiebung der Tastelemente auch dadurch erfolgen, dass die Enden der in den schlitzförmigen Ausnehmungen geführten Drehachsen in einer Kulisse, d.h. einer kurvenförmigen Nut, außerhalb der Trägerscheiben geführt werden.

Da außerhalb eines unteren Leseabschnitts jedoch zugleich auch die Einstellung bzw. Verstellung der Tastelemente erfolgt und insbesondere bei quaderförmigen Tastelementen die lichte Weite der Tastelemente während der Drehbewegung sich auf die Länge der Diagonale vergrößert, ist es hinsichtlich einer zuverlässigen Vermeidung einer Blockade in Zusammenhang mit der innenliegenden Anlagefläche günstig, wenn die innenliegenden Anlageflächen zumindest teilweise von mehreren vorzugsweise federnd gelagerten Führungselementen gebildet werden. Diese federnd gelagerten Führungselemente sind vorteilhafterweise in jenen Abschnitten vorgesehen, in welchen zumindest eine Stellvorrichtung zum Drehen eines Tastelements vorgesehen ist.

Alternativ zu den vorstehend genannten Möglichkeiten zur Freigabe der Drehbewegung der Tastelemente durch radiale Verschiebung und Verriegelung der Drehbewegung durch Anlageflächen kann auch zwischen jeweils zwei benachbarten Gruppen von Tastelementen - d.h. insbesondere zwischen jeweils zwei Formen der Braille-Schrift - jeweils ein Steg angeordnet sein.

Diese Stege können derart zwischen den beiden Trägerscheiben angeordnet sein, dass sie in einer Sperrstellung im unteren Leseabschnitt den Spalt zwischen jeweils zwei benachbarten Gruppen von Tastelementen dermaßen ausfüllen, dass eine Verdrehung der Tastelemente verhindert wird. Vorteilhafter sind die Stege in einem oberen Einstellabschnitt aus einer radial innenliegenden Sperrstellung in eine radial außenliegende Freigabestellung verschieblich gelagert, so dass sie in jenem Bereich, in dem eine Drehbewegung möglich sein soll, zur Freigabe der Drehbewegung entsprechend ausgefahren werden.

Alternativ zu der vorstehend genannten Möglichkeit zur Verriegelung und Freigabe der Drehbewegung der Tastelemente durch verschiebliche Stege zwischen den einzelnen Gruppen von Tastelementen, können diese Stege auch unverschieblich mit den Trägerscheiben verbunden sein. In diesem Fall ist es vorteilhaft, wenn zumindest eine Gruppe von Tastelementen in einem oberen Einstellabschnitt aus einer radial innenliegenden Sperrstellung in eine radial außenliegende Freigabestellung verschieblich gelagert ist. Somit können die Tastelemente gemäß der bereits beschriebenen radialen Verschiebung im unteren Leseabschnitt zwischen die Stege bewegt und somit verriegelt werden, während sie in jenem Bereich, in dem eine Drehbewegung möglich sein soll, zur Freigabe der Drehbewegung entsprechend radial nach außen ausgefahren werden.

Um jedes Tastelement während eines Umlaufs, insbesondere mit Hilfe der Trägerscheiben, verstellen zu können, ist es günstig, dass jeder Reihe von Tastelementen zumindest ein Stellglied zum Verdrehen zugeordnet ist. Die Tastelemente benachbarter Gruppen von Tastelementen, welche jeweils die gleiche Punkt-Zeile eines tastbaren Zeichens darstellen, bilden eine gemeinsame Reihe von Tastelementen. Demnach weist die Vorrichtung zumindest zwei, vorzugsweise drei oder vier, Reihen von Tastelementen auf. Somit kann über das der jeweiligen Reihe von Tastelementen zugeordnete Stellglied nach jedem Umlauf eine neue Einstellung erfolgen und somit mit einer äußerst geringen Anzahl an Stellgliedern und Tastelementen ein beliebig langer Text wiedergegeben werden.

Hinsichtlich einer konstruktiv einfachen Lösung zum Verdrehen der Tastelemente, wobei bei jeder Umdrehung der Trägerscheiben ein Tastelement gar nicht, um 90°, 180° oder 270° verdreht werden kann und somit jede beliebige Punktkombination einstellbar ist, ist es von Vorteil, wenn drei in Umfangsrichtung beabstandet angeordnete Gruppen an Stellgliedern vorgesehen sind, wobei jede Gruppe an Stellgliedern jeweils ein jeder Reihe von Tastelementen zugeordnetes Stellglied aufweist. Somit kann in jedem Umlauf auf einfache Weise jede beliebige Kombination an tastbaren Punkten in jeder Gruppe der Tastelemente eingestellt werden.

Sofern zumindest ein Sensor zur Positions- bzw. Winkel- und Drehrichtungsbestimmung der Trägerscheiben vorgesehen ist, kann nach einem einfachen Umlauf der Trägerscheibe mit Hilfe des Sensors und auf einfache Weise festgestellt werden, in welcher Position sich die Trägerscheibe aktuell befindet und somit eine Synchronisation der Stellglieder mit der Winkelposition erzielt werden.

Zudem kann mit Hilfe einer Ausleseeinheit zur Bestimmung der Drehausrichtung jedes Tastelements, insbesondere im Rahmen einer Initialisierungsphase, d.h. in einem einfachen ersten Umlauf der Trägerscheiben um 360°, die aktuelle Ausgangsposition einer jeden Gruppe an Tastelementen detektiert werden. Somit wird im Rahmen einer Initialisierungsphase mit Hilfe des Sensors zur Positions- bzw. Winkelbestimmung und der Ausleseeinheit auf einfache Weise eine Erfassung sämtlicher Tastelemente bzw. deren Drehausrichtung erzielt, sodass dann mit Hilfe einer entsprechenden Ansteuerung der Stellglieder der gewünschte Text eingestellt werden kann.

Um die Tastelemente ungewollten äußeren Einflüssen zu entziehen und zudem einen zuverlässigen Umlauf der Trägerscheiben zu erzielen, ist es von Vorteil, wenn die Aufnahmevorrichtung samt Tastelementen in einem Gehäuse aufgenommen ist, wobei Führungsrollen, vorzugsweise zwei untere und zwei obere Führungsrollen, zwischen dem Gehäuse und den Trägerscheiben und/oder eine Führungsvorrichtung vorgesehen sind.

Wenn mit dem Gehäuse zumindest zwei drehbar gelagerte Stützrollen verbunden sind, kann das Gehäuse mit der darin aufgenommenen Aufnahmevorrichtung bzw. den Tastelementen auf einfache Weise auf einer im Wesentlichen ebenen Unterfläche, z.B. einem Tisch oder dergleichen, verschoben werden.

Um während des Verschiebens des Gehäuses zugleich die Trägerscheiben der Tastelemente zu drehen, ist es vorteilhaft, wenn ein äußerer Rand der Trägerscheiben bzw. mit den Trägerscheiben drehfest verbundenes vorzugsweise ringsumflaufendes Reibelement derart angeordnet ist, dass bei Auflage der Stützrollen auf einer im Wesentlichen ebenen Untergrundfläche der äußere Rand der Trägerscheiben und/oder das ringsumflaufende Reibelement mit der Untergrundfläche in Reibkontakt steht. Somit werden während des Verschiebens des Gehäuses die Trägerscheiben durch das Ablaufen auf einer Untergrundfläche rotiert. Demzufolge ist es vorteilhafterweise nicht erforderlich, einen externen Antrieb, z.B. einen Elektromotor oder dergleichen, für den Umlauf der Trägerscheiben vorzusehen. Grundsätzlich ist das Vorsehen eines externen Antriebs bei einer alternativen Ausgestaltung allerdings selbstverständlich möglich.

Da bei einer üblichen Braille-Form nur zwei Punkte pro Punkt-Zeile vorhanden sind und somit mit 4 Seiten sämtliche Kombinationen (kein Punkt, Punkt links, Punkt rechts, beide Punkte) einstellbar sind, sind die Tastelemente erfindungsgemäss quaderförmig, wobei die die tastbaren Punkte gegebenenfalls aufweisenden Seiten- bzw. Tastflächen jeweils gleich lange Längs- und Querkanten aufweisen.

Hinsichtlich einer einfachen Ertastbarkeit der tastbaren Punkte ist es günstig, wenn die Seiten- bzw. Tastflächen der Tastelemente jeweils eine plane oder gegenüber dem Tastelement konkave Grundfläche aufweisen, von welchen gegebenenfalls Tastpunkte erhaben vorstehen.

Die Erfindung wird nachstehend anhand von in den Zeichnungen dargestellten bevorzugten Ausführungsbeispielen, auf die sie jedoch keinesfalls beschränkt sein soll, im Detail erläutert. In den Zeichnungen zeigen im Einzelnen:
Fig. 1a eine perspektivische Ansicht einer Gruppe von Tastelementen,
Fig. 1b eine Ansicht auf die Stirnseite einer Gruppe von Tastelementen gemäß Fig. 1a,
Fig. 1c eine Draufsicht auf drei Gruppen benachbarter Tastelemente,
Fig. 2 eine perspektivische Ansicht einer Vielzahl entlang einer Kreisbahn, drehbar gelagerter, jeweils in Gruppen von drei, zusammengefasster Tastelemente,
Fig. 3 eine perspektivische Ansicht auf die entlang einer Kreisbahn angeordneten Gruppen von Tastelementen gemäß Fig. 2, welche in einer Trägerplatte drehbar und verschieblich gelagert sind,
Fig. 4 eine perspektivische Ansicht einer oberen Führungsvorrichtung sowie von Stellgliedern,
Fig. 5 eine Seitenansicht der oberen Führungsvorrichtung und der Stellglieder gemäß Fig. 4,
Fig. 6 eine Detailansicht während ein Stellglied mit einem Tastelement in Eingriff gelangt,
Fig. 7 eine perspektivische Detailansicht während eines Verdrehvorgangs der Tastelemente,
Fig. 8 eine perspektivische Ansicht einer teilweise aufgebrochenen Vorrichtung mit einer oberen und unteren Führungsvorrichtung,
Fig. 9 eine Seitenansicht der teilweise aufgebrochenen Vorrichtung gemäß Fig. 8,
Fig. 10 eine perspektivische Ansicht gemäß Fig. 8 mit einem schematisch dargestellten Finger einer Person,
Fig. 11 eine Seitenansicht entsprechend Fig. 10 mit der schematischen Darstellung eines Fingers einer Person,
Fig. 12 eine perspektivische Ansicht einer teilweise aufgebrochenen Vorrichtung, welche auf einer Untergrundfläche aufgesetzt ist,
Fig. 13a eine Ansicht auf eine Stirnseite eines alternativen Ausführungsbeispiels eines Tastelements,
Fig. 13b eine Seitenansicht mehrerer Gruppen benachbarter Tastelemente gemäß Fig. 13a,
Fig. 13c eine perspektivische Ansicht einer Gruppe von Tastelementen gemäß des alternativen Ausführungsbeispiels gemäß Fig. 13a,
Fig. 14a eine Ansicht eines alternativen Ausführungsbeispiels zur Verriegelung und Freigabe der Drehbewegung der Tastelemente mit zwischen den Trägerscheiben angeordneten Stegen,
Fig. 14b eine Ansicht einer Ausführungsvariante gemäß Fig. 14a, wobei die Stege in einer verschobenen Freigabestellung angeordnet sind, und
Fig. 14c eine Ansicht einer alternativen Ausführungsvariante gemäß Fig. 14a, wobei eine Gruppe von Tastelementen in einer veschobenen Freigabestellung angeordnet ist.

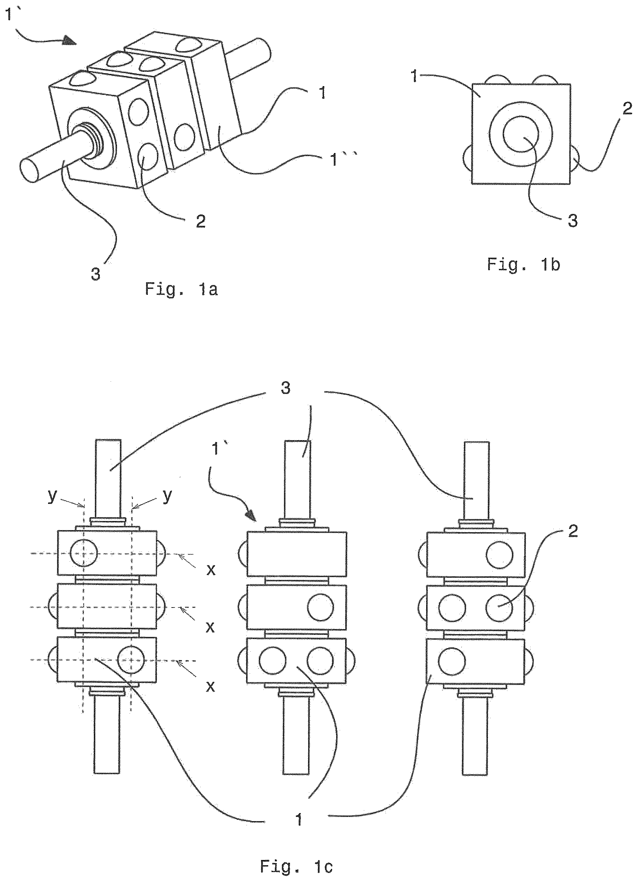

In Fig. 1a und 1b ist eine Gruppe 1' von drei im Wesentlichen quaderförmigen Tastelementen 1 ersichtlich. Die drei quaderförmigen Tastelemente 1 sind auf einer gemeinsamen Drehachse 3 drehbar gelagert und somit zu einer gemeinsamen Gruppe 1' von Tastelementen 1 zusammengefasst.

Die vier Seiten- bzw. Tastflächen 1'' eines jeden Tastelements 1 weisen hierbei keinen, einen links oder rechts angeordneten tastbaren Punkt 2 oder jedoch zwei tastbare Punkte 2 auf. Somit kann mit den drei quaderförmigen Tastelementen 1 jede beliebige Braille-Form, bestehend aus einer Matrix von tastbaren Punkten 2, die in zwei nebeneinander angeordneten Punkt-Spalten y und drei Punkt-Zeilen x anordenbar sind, durch entsprechende Verdrehung des Tastelements 1 auf der Drehachse 3 dargestellt werden.

In Fig. 1c sind drei nebeneinander angeordnete derartige Gruppen 1' von drei auf einer gemeinsamen Drehachse 3 angeordneten Tastelementen 1 gezeigt, mit welchen somit drei benachbarte Braille-Formen dargestellt werden können; durch die Anordnung einer Vielzahl derartiger Gruppen 1' von Tastelementen 1 kann somit ein beliebig langer Text dargestellt werden.

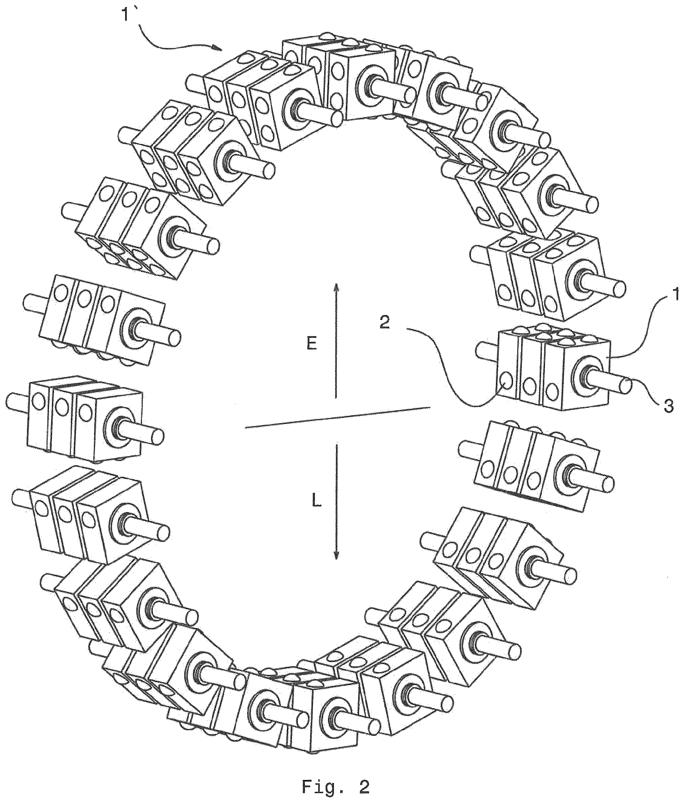

Um die Anzahl der erforderlichen Gruppen 1' an Tastelementen 1 zu begrenzen, ist es wie in Fig. 2 ersichtlich, vorteilhaft, die Gruppen 1' im Wesentlichen entlang einer Kreisbahn anzuordnen. Durch eine derartige Anordnung definieren die Gruppen 1' im Wesentlichen einen Hohlzylinder, welcher insbesondere in einen unteren Leseabschnitt L und einen oberen Einstellabschnitt E unterteilt werden kann. In dem unteren Leseabschnitt L ergibt sich somit auf der Innenseite des Hohlzylinders eine im Wesentlichen konkave Fläche, welche sich vorteilhafterweise an die Fingerkuppe der die Vorrichtung benutzenden Person anschmiegt, sodass hier ein üblichen Braille-Displays im Wesentlichen entsprechendes Lesebild gegeben ist.

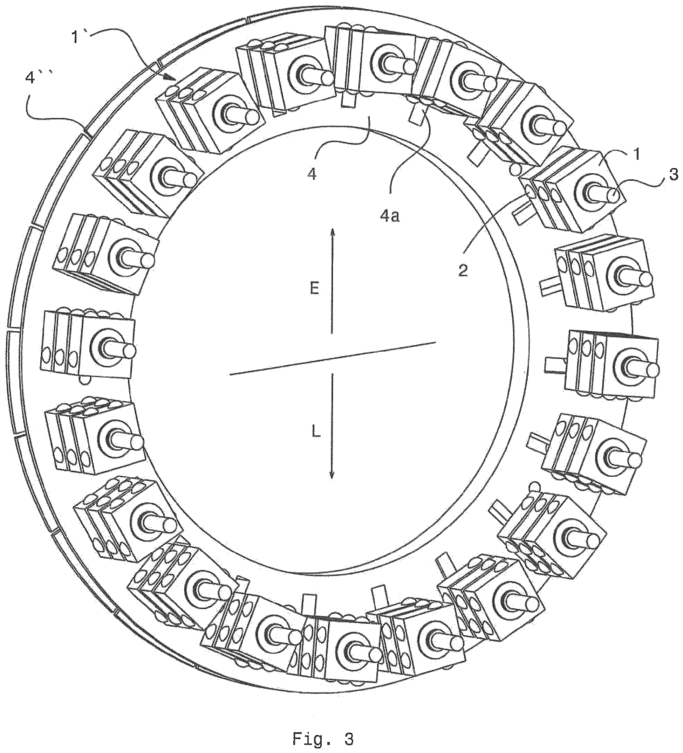

In Fig. 3 ist insbesondere ersichtlich, dass die Vielzahl an Gruppen 1' von Tastelementen 1 auf einer gemeinsamen ringförmigen Trägerscheibe 4 verschieblich gelagert sind; die einzelnen Tastelemente 1 sind hierbei um die jeweilige Drehachse 3 drehbar gelagert. Selbstverständlich handelt es sich hierbei nur um eine aufgebrochene Darstellung der Vorrichtung. Auch die in Fig. 3 ersichtlichen, frei auskragenden Enden der Drehachsen 3 sind jeweils in einer entsprechenden (nicht dargestellten) ringförmigen Trägerscheibe 4 gelagert; die Trägerscheiben 4 bilden gemeinsam die Aufnahmevorrichtung.

Die Gruppen 1' an Tastelementen 1 sind jedoch nicht nur drehbar gelagert, sondern zudem ist auch eine Radialführungsvorrichtung 4a in Form von Führungsschlitzen ersichtlich, sodass die Gruppen 1' an Tastelementen 1 insbesondere in dem Leseabschnitt L durch eine Nach-Innen-Verlagerung aneinander angenähert werden und in dem Einstellabschnitt E durch eine Nach-Außen-Verlagerung voneinander beabstandet werden. Somit kann einerseits ein Abstand, wie er üblicherweise zwischen zwei Braille-Formen vorgesehen ist, im Leseabschnitt L eingestellt werden, andererseits jedoch kann während des Einstellens bzw. Verdrehens der Tastelemente 1 eine Kollision mit benachbarten Tastelementen 1 im Einstellabschnitt E zuverlässig vermieden werden.

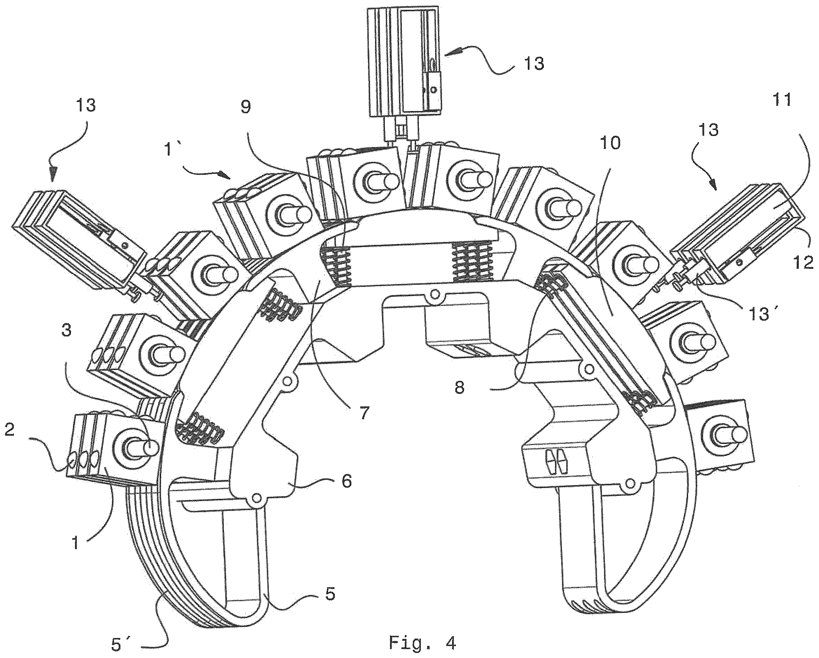

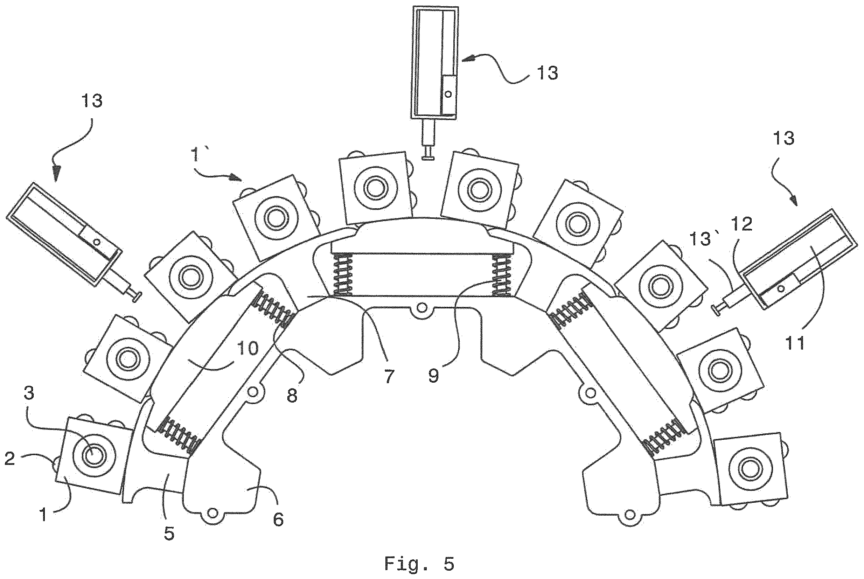

In den Fig. 4 und 5 ist eine obere Führungsvorrichtung 5 mit mehreren federnd gelagerten Führungselementen 10 gezeigt.

Die obere Führungsvorrichtung 5 weist hier grundsätzlich eine entlang einer Kreisbahn verlaufende Führungsfläche 5' auf, welche jedoch im Bereich von drei umfangsseitig versetzt zueinander angeordneten Stellvorrichtungen 13 unterbrochen ist. In diesen Bereichen sind jeweils federnd gelagerte Führungselemente 10 vorgesehen, welche mit Hilfe von Führungsstiften 9 gegen die Kraft von Federn 8 in radialer Richtung und linear verschieblich gelagert sind. Die Führungsstifte 9 sowie die Führungsbahn 5', sowie die nicht federnd gelagerten Zwischenelemente 7 sind allesamt auf einer gemeinsamen Halterung 6 angeordnet.

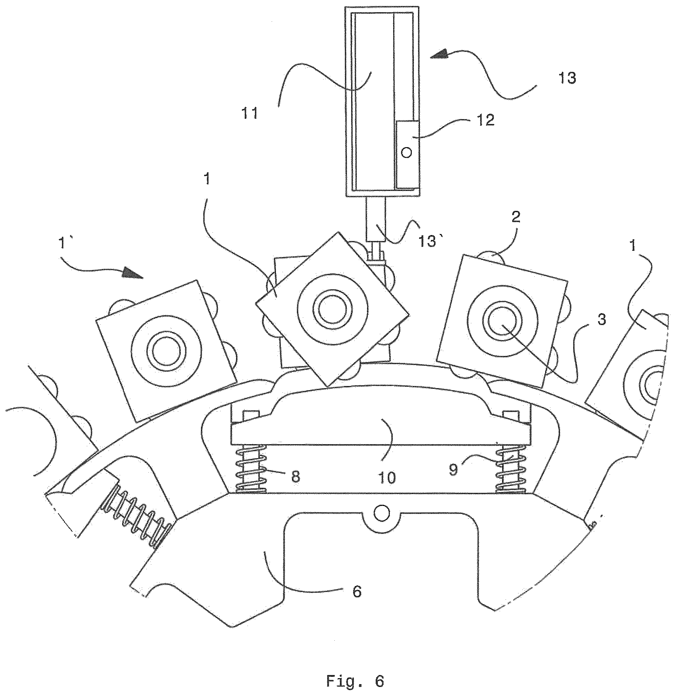

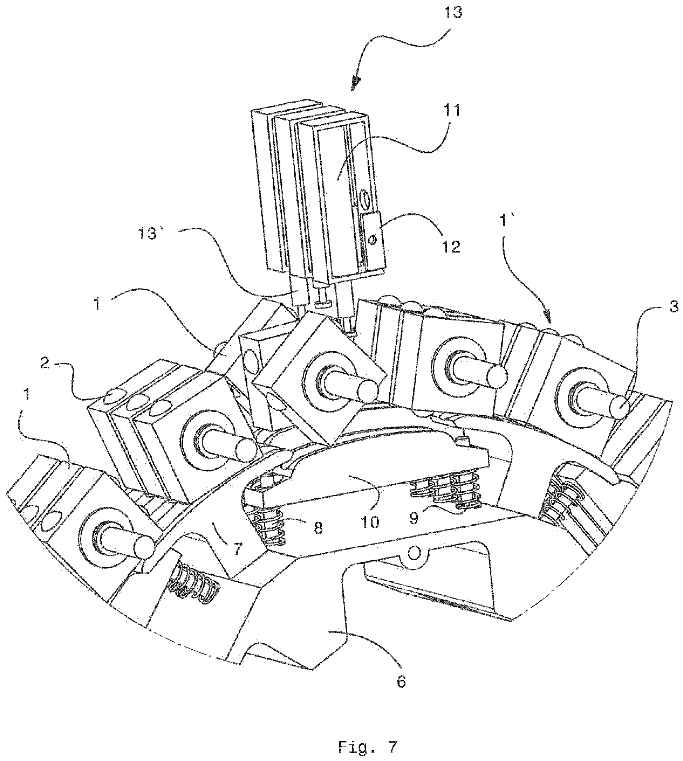

In den Fig. 6 und 7 ist ersichtlich, dass zum Verdrehen eines Tastelements 1 als Stellglied ein Aktuatorstift 13' der Stellvorrichtung 13 mit Hilfe des Aktuators 11, z.B. eines Magnetaktuators, welcher in einem Gehäuse 12 aufgenommen ist, ausfährt, sodass der Aktuatorstift 13' mit dem entsprechenden Tastelement 1 in Berührung gelangt. Durch die Anlage des Aktuatorstifts 13' an dem quaderförmigen Tastelement 1 wird das Tastelement 1 bei einem Vorbeilaufen an einem aktivierten Aktuator 11 auf der Drehachse 1 um 90° verdreht. Jede Stellvorrichtung 13 weist hierbei eine der Anzahl der Tastelemente 1 entsprechende Anzahl an nebeneinander angeordneten Aktuatorstiften 13' auf.

Bei der Verdrehung eines Tastelements 1 vergrößert sich die körperliche Ausdehnung des Tastelements 1 in Richtung der innenliegenden oberen Führungsvorrichtung 5, da sich die Ausdehnung des quaderförmigen Tastelements 1 in Richtung der innenliegenden Führungsvorrichtung 5 von dem Mittelpunkt der Drehachse 3 gemessen von einer halben Seitenlänge auf die halbe Diagonale der quadratischen Grundfläche des quaderförmigen Tastelements 1 erhöht. Um ein ungehindertes Verdrehen zu ermöglichen, ist im Bereich der Stellvorrichtungen 13 ein gefedertes Führungselement 10 vorgesehen, welches - wie in Fig. 6 ersichtlich - während des Verdrehens des Tastelements 1 nach innen ausweicht und somit einer Verdrehung des Tastelements 1 nichts entgegensteht.

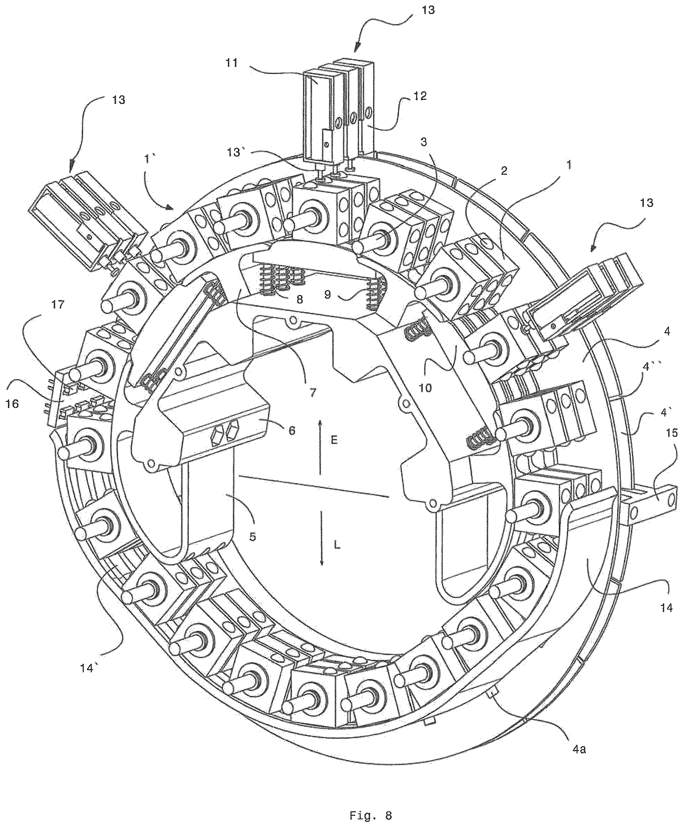

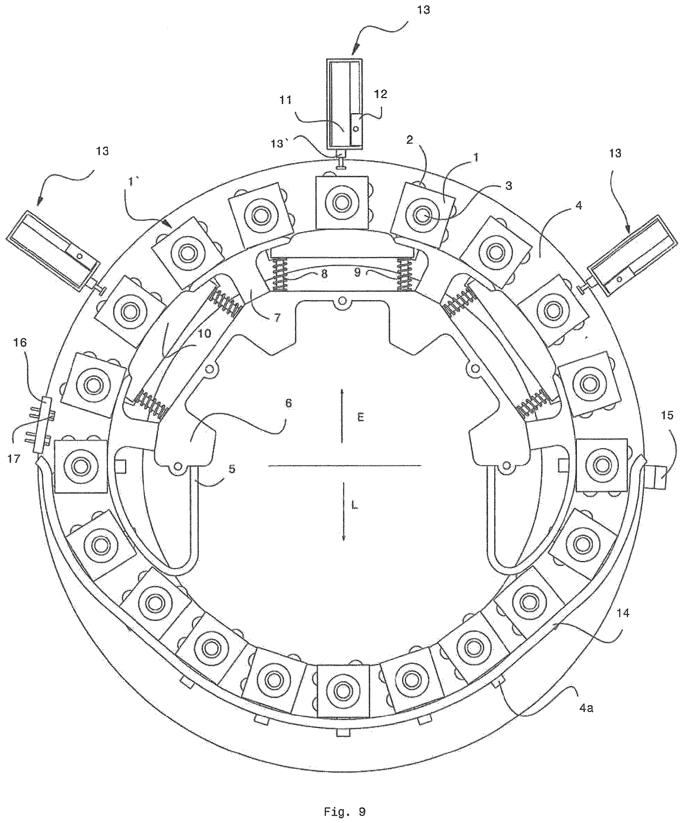

In den Fig. 8 und 9 ist jeweils eine im Wesentlichen entlang einer Symmetrieebene aufgebrochene erfindungsgemäße Vorrichtung gezeigt, wobei hier nicht nur die obere Führungsvorrichtung 5, sondern auch eine untere Führungsvorrichtung 14 ersichtlich ist.

Die untere Führungsvorrichtung 14 besteht im Wesentlichen aus einer bezüglich der Tastelemente 1 außenliegenden Führungsfläche 14', über welche die Tastelemente 1 insbesondere in einem unteren Leseabschnitt L in den Führungsschlitzen 4a radial nach innen verschoben werden und somit aneinander angenähert werden, sodass im Bereich des unteren Leseabschnitts L der Abstand zwischen zwei von jeweils einer Gruppe 1' von Tastelementen 1 definierten Braille-Formen dem üblichen Abstand zwischen zwei Braille-Formen entspricht.

In dieser aneinander angenäherten Anordnung benachbarter Gruppen 1' können diese Gruppen 1' bzw. die Tastelemente 1 nicht gegeneinander verdreht werden, da sie einander gegenseitig blockieren würden. Demzufolge ist vorgesehen, dass mit Hilfe der oberen Führungsvorrichtung 5 nach dem Austritt aus dem unteren Leseabschnitt L und dem Eintritt in den oberen Einstellabschnitt E die Gruppe 1' von Tastelementen 1 wieder voneinander entfernt werden, sodass - wie bereits vorstehend beschrieben - mit Hilfe der Stellvorrichtungen 13 bzw. der Aktuatorstifte 13' jedes Tastelement 1 an drei unterschiedlichen Positionen jeweils um 90° verdreht werden kann. Hierdurch kann jedes Tastelement 1 beim einmaligen Umlauf um 0°, 90°, 180° oder 270° verdreht werden, sodass kein, ein linker, ein rechter oder beide Tastpunkt(e) zur Innenseite des Hohlzylinders ausgerichtet werden können; somit kann mit jeder Gruppe 1' von Tastelementen 1 jede beliebige Braille-Form nach einmaligen Umlauf dargestellt werden.

Um die Drehausrichtung und die Drehrichtung der Trägerscheibe 4 bzw. einer hiermit drehfest verbundenen Detektionsscheibe 4' zu ermitteln, ist ein Sensor 15, vorzugsweise in Form einer richtungsabhängigen Doppel-Gabellichtschranke, vorgesehen, welcher Schlitze 4'' in der Detektorplatte 4' erfasst. Die Schlitze verlaufen in Draufsicht deckungsgleich mit den Führungsschlitzen 4a, in welchen jeweils eine Drehachse 3 aufgenommen ist. Somit kann während des Umlaufs der Trägerscheibe 4 mit Hilfe des Sensors 15 jeweils detektiert werden, in welcher Drehausrichtung sich die Trägerscheibe 4 befindet bzw. welche Gruppe 1' von Tastelementen 1 sich in welcher Position befindet und in welcher Richtung die Drehung erfolgt.

Um die Stellung bzw. Drehausrichtung der einzelnen Tastelemente 1 zu erfassen, ist weiters eine Ausleseeinheit 17 vorzugsweise in Form von Reflexlichtschranken vorgesehen, welche auf einer Trägerplatte 16 angeordnet ist. Hiermit wird insbesondere zunächst einmal im Rahmen einer Initialisierungsphase, welche eine einmalige Rotation um 360° vorsieht, die Anordnung sämtlicher Tastelemente 1 sämtlicher Gruppen 1' erfasst und gespeichert.

Mit Hilfe eines - nicht Gegenstand dieser Erfindung bildenden - computerimplementierten Verfahrens kann somit mit Hilfe des Sensors 15 und der Ausleseeinheit 17 und einer entsprechenden Ansteuerung der Steuervorrichtung 13 jeder beliebige Text mit Hilfe der erfindungsgemäßen Vorrichtung dargestellt werden.

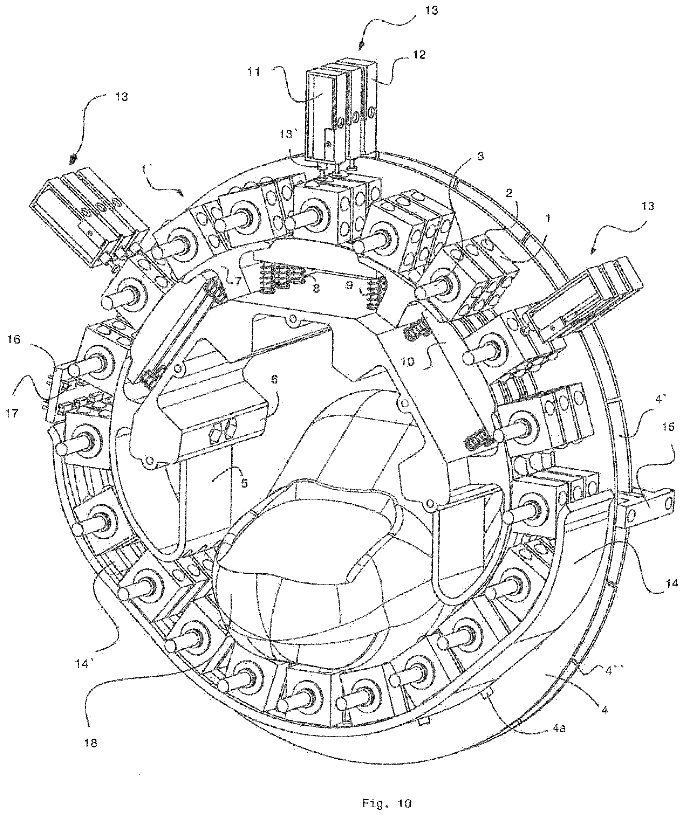

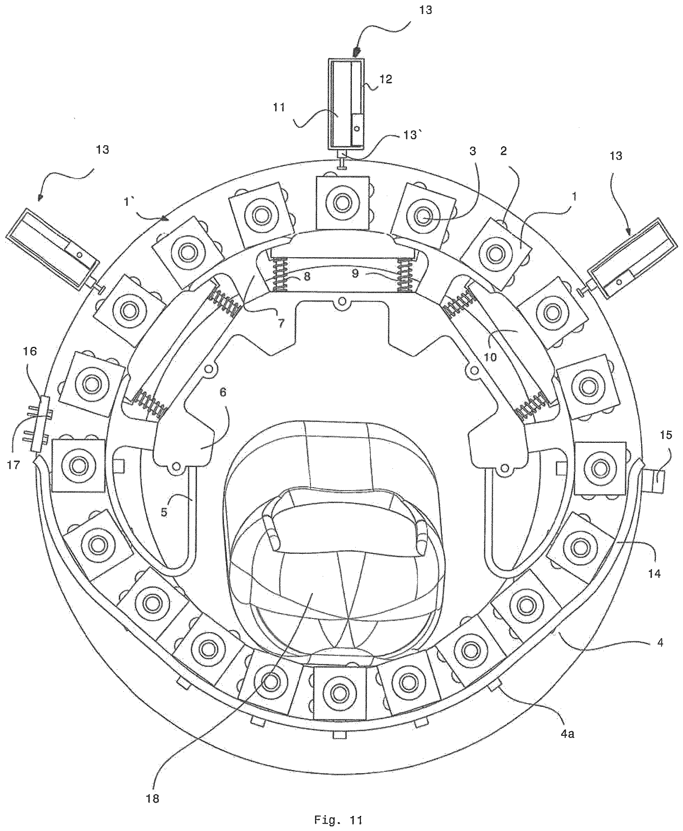

In den Fig. 10 und 11 ist sodann ersichtlich, dass eine die Vorrichtung benutzende Person einen Finger 18 bzw. eine Fingerkuppe in den unteren Leseabschnitt L des Hohlzylinders auflegen kann, um sodann die gerade im Leseabschnitt L befindlichen bzw. am Finger vorbeigleitenden Braille-Formen ertasten zu können.

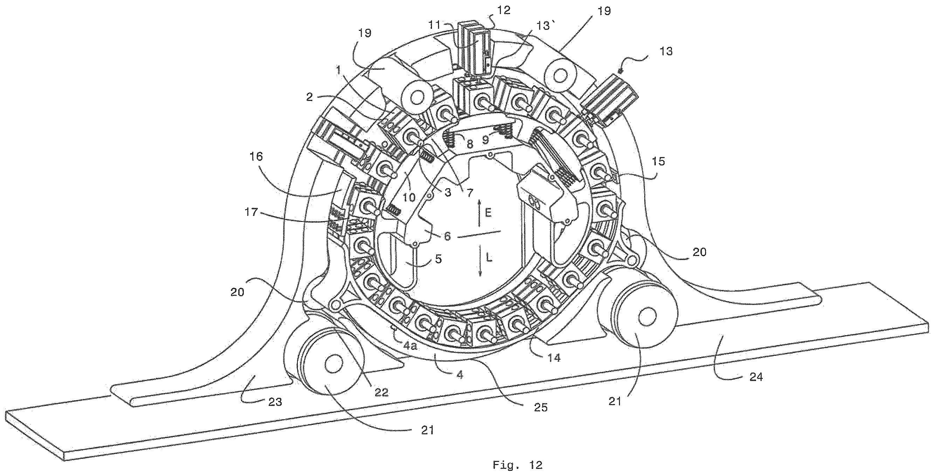

In Fig. 12 ist die teilweise entlang einer Symmetrie geschnittene Vorrichtung mit einem Gehäuse 23 gezeigt, welches zwei Abstützrollen 21 aufweist, mit welchen die gesamte Vorrichtung auf einfache Weise auf einer im Wesentlichen ebenen Untergrundfläche 24, z.B. einem Tisch oder dergleichen, verschoben werden kann.

Bei einer derartigen Verschiebebewegung berührt ein äußerer Rand 25 der Trägerscheiben 4 bzw. ein vorzugsweise umlaufend hiermit verbundenes (nicht gezeigtes) Reibelement ebenfalls die Untergrundfläche 24, sodass bei einer Verschiebe- bzw. Linearbewegung des Gehäuses 23 auf der Untergrundfläche 24 die Trägerscheiben 4 samt den darin gelagerten Tastelementen 1 mit der Drehbewegung der Trägerscheiben 4 rotiert werden, sodass nachfolgend unterschiedliche Gruppen 1' an Tastelementen 1 in den Leseabschnitt L gelangen. Danach werden die Tastelemente 1 in den Einstellabschnitt E gedreht, in welchem sie mit Hilfe der Stellvorrichtung 13 eingestellt werden und sodann wiederum in den Leseabschnitt L gelangen. Mit Hilfe der erfindungsgemäßen Vorrichtung kann somit ein beliebig langer Text in Form von tastbaren Elementen dargestellt werden.

In Fig. 12 ist zudem noch ersichtlich, dass mit dem Gehäuse 23 im oberen Einstellabschnitt E zwei obere Führungsrollen 19 drehbar verbunden sind und zudem mit der unteren Führungsvorrichtung bzw. dem Gehäuse 23 zwei untere Führungsrollen 20 drehbar verbunden sind. Mit Hilfe der Führungsrollen 19, 20 werden die in der Trägerscheibe 4 verschieblich gelagerten im Wesentlichen entlang einer Kreisbahn umlaufenden Tastelemente 1 zuverlässig in dem Gehäuse 23 zentriert.

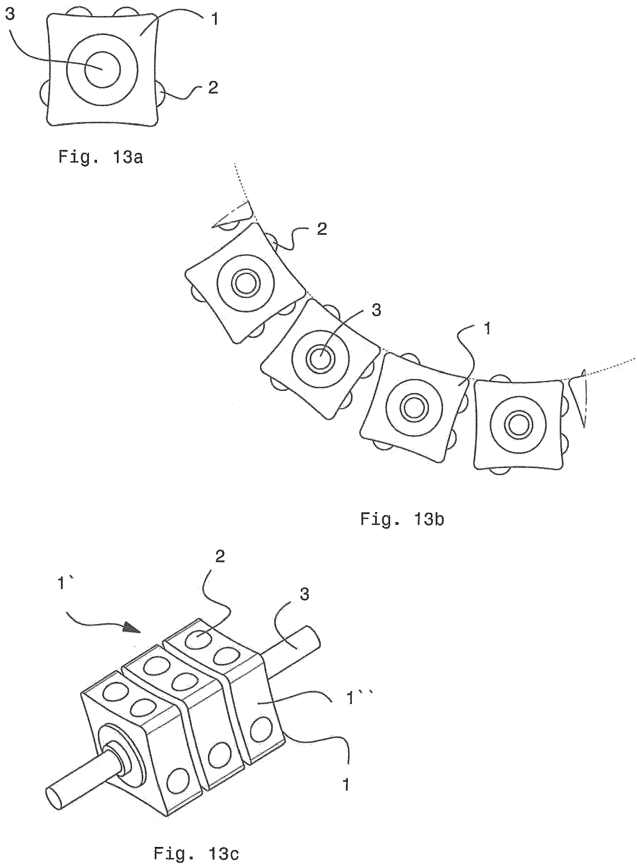

In den Fig. 13a bis 13c ist ein alternatives Ausführungsbeispiel gezeigt, wobei hier die quaderförmigen Tastelemente geringfügig konkav gekrümmte Seiten- bzw. Tastflächen 1'' aufweisen. Bei dem zuvor beschriebenen Ausführungsbeispiel sind hingegen im Wesentlichen plane Seitenflächen 1'' vorgesehen.

Die Krümmung der Seitenflächen 1'' entspricht vorzugsweise - wie insbesondere in Fig. 13b ersichtlich - einer virtuellen Kreisbahn, welche von den nebeneinander angeordneten gruppieren Tastelementen 1 definiert wird. Somit ergibt sich für die benutzende Person der Vorrichtung eine im Wesentlichen durchgehend entlang einer einzigen Kreisbahn verlaufende Fläche, von welcher die erhabenen tastbaren Punkte 2 hervorstehen.

Wesentlich ist aber lediglich, dass die vier unterschiedlichen Punktkombinationen einer Punkt-Zeile in einem einzigen Tastelement zusammengefasst sind, sodass mit Hilfe von zumindest drei derartigen, vorzugsweise auf einer gemeinsamen Drehachse gelagerten, Tastelementen alle üblichen Braille-Formen dargestellt werden können.

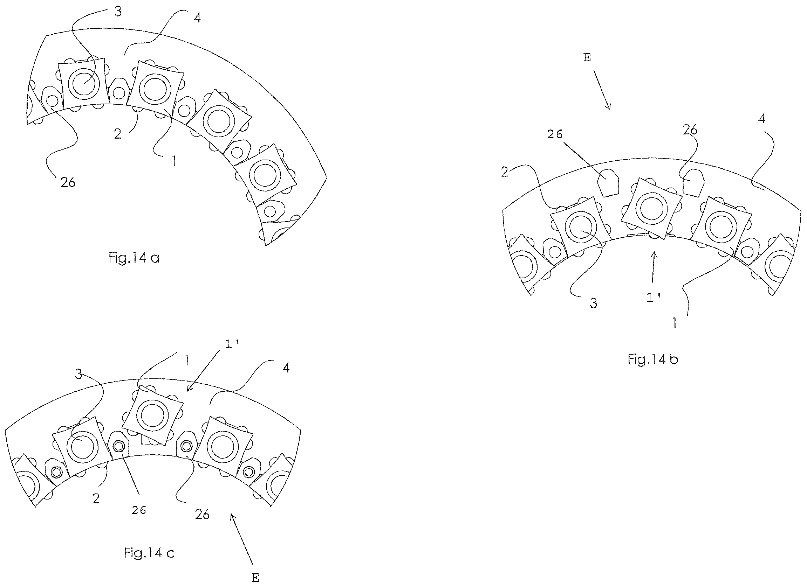

In den Fig. 14a bis 14c ist ein alternatives Ausführungsbeispiel für die Verriegelung und Freigabe der Tastelemente 1 für deren Drehbewegung gezeigt, wobei hier Stege 26 zwischen den Trägerscheiben 4 angeordnet sind. Fig. 14b zeigt einen oberen Einstellabschnitt E, in welchem zwei Stege 26, welche benachbart einer Gruppe 1' von Tastelementen 1 angeordnet sind, aus einer radial innenliegenden Sperrstellung (vgl. Fig. 14a) in einer radial nach außen verschobenen Freigabestellung gezeigt sind. In dieser außenliegenden Freigabestellung sind die Tastelemente 1 für eine Drehbewegung freigegeben und können somit mit einer (in Fig. 14b nicht dargestellten) Stellvorrichtung 13 auf einfache Weise verdreht werden.

Fig. 14c zeigt eine alternative Ausführungsvariante zur Verriegelung und Freigabe der Drehbewegung der Tastelemente 1, wobei in einem oberen Einstellabschnitt E eine Gruppe 1' von Tastelementen 1 aus einer radial innen liegenden Sperrstellung (vgl. Fig. 14a) in eine radial außenliegende Freigabestellung verschoben ist. In dieser außenliegenden Freigabestellung der Tastelemente 1 sind diese für eine Drehbewegung freigegeben und können somit mit einer (in Fig. 14c nicht dargestellten) Stellvorrichtung 13 auf einfache Weise verdreht werden.

## Patentansprüche

1. Vorrichtung zur Darstellung von tastbaren Zeichen, insbesondere in Braille-Schrift, mit in Gruppen (1') zusammengefassten Tastelementen (1), wobei ein tastbares Zeichen jeweils aus einer Matrix von tastbaren Punkten (2) besteht, die in zwei nebeneinander angeordneten Punkt-Spalten (y) und zumindest zwei Punkt-Zeilen (x) anordenbar sind, wobei die vier möglichen Kombinationen von zwei tastbaren Punkten (2) von in einer Punkt-Zeile (x) nebeneinander angeordneten tastbaren Punkten (2) jeweils auf einem gemeinsamen Tastelement (1) angeordnet sind, wobei die Tastelemente (1) im Wesentlichen quaderförmig sind und jedes Tastelement (1) vier Seiten- bzw. Tastflächen (1'') mit keinem, einem links oder rechts angeordneten tastbaren Punkt oder zwei tastbaren Punkten (2) aufweist, wobei die einzelnen Tastelemente (1) drehbar gelagert sind und die jeweils in einer Gruppe (1') zusammengefassten Tastelemente (1) auf einer gemeinsamen Drehachse (3) gelagert sind, **dadurch gekennzeichnet, dass** in unterschiedlichen Gruppen (1') zusammengefasste Tastelemente (1) unterschiedliche, im Wesentlichen parallele Drehachsen (3) aufweisen, wobei die Gruppen von Tastelementen in einer im Wesentlichen kreisringförmigen Aufnahmevorrichtung gelagert sind und Tastelemente (1) benachbarter Gruppen (1') von Tastelementen (1), welche jeweils die gleiche Punkt-Zeile (x) eines tastbaren Zeichens darstellen, eine gemeinsame Reihe von Tastelementen (1) bilden, und jeder Reihe von Tastelementen (1) zumindest ein Stellglied (13') zum Verdrehen zugeordnet ist.

2. Vorrichtung nach Anspruch 1, **dadurch gekennzeichnet, dass** die kreisringförmige Aufnahmevorrichtung zwei kreisringförmige Trägerscheiben (4) umfasst, zwischen welchen die Tastelemente (1) aufgenommen sind, wobei vorzugsweise die kreisringförmige Aufnahmevorrichtung zur verschieblichen Lagerung der Tastelemente (1) in radialer Richtung verlaufende Radial-Führungselemente (4a) aufweist.

3. Vorrichtung nach Anspruch 2, **dadurch gekennzeichnet, dass** als Radial-Führungselemente (4a) schlitzförmige Ausnehmungen jeweils zur Aufnahme einer Drehachse (3) einer Gruppe (1') von Tastelementen (1) vorgesehen sind.

4. Vorrichtung nach einem der Ansprüche 1 bis 3, **dadurch gekennzeichnet, dass** eine untere Führungsvorrichtung (14) vorgesehen ist, welche mehrere Gruppen (1') an Tastelementen (1) in einem unteren Leseabschnitt (L) nach radial innen verschiebt, wobei vorzugsweise als untere Führungsvorrichtung (14) eine außenliegende Anlagefläche (14') ausgebildet ist, mit welcher die Tastelemente (1) nach innen verschoben werden.

5. Vorrichtung nach einem der Ansprüche 1 bis 4, **dadurch gekennzeichnet, dass** eine obere Führungsvorrichtung (5) vorgesehen ist, welche zumindest eine Gruppe (1'), insbesondere mehrere Gruppen (1'), an Tastelementen (1) in einem oberen Einstellabschnitt (E) nach radial außen verschiebt, wobei vorzugsweise die obere Führungsvorrichtung (5) als innenliegende Anlagefläche(n) (5') ausgebildet ist, mit welcher die Tastelemente (1) nach außen verschoben werden, und insbesondere die innenliegenden Anlageflächen (5') teilweise von mehreren vorzugsweise federnd gelagerten Führungselementen (10) gebildet werden.

6. Vorrichtung nach einem der Ansprüche 1 bis 5, **dadurch gekennzeichnet, dass** zwischen zwei benachbarten Gruppen (1') von Tastelementen (1) jeweils ein Steg (26) angeordnet ist, wobei vorzugsweise die Stege (26) in einem oberen Einstellabschnitt (E) aus einer radial innenliegenden Sperrstellung in eine radial außenliegende Freigabestellung verschieblich gelagert sind.

7. Vorrichtung nach Anspruch 6, **dadurch gekennzeichnet, dass** zumindest eine Gruppe (1') von Tastelementen in einem oberen Einstellabschnitt (E) aus einer radial innenliegenden Sperrstellung in eine radial außenliegende Freigabestellung verschieblich gelagert ist.

8. Vorrichtung nach Anspruch 1, **dadurch gekennzeichnet, dass** drei in Umfangsrichtung beabstandet angeordnete Gruppen an Stellgliedern (13') vorgesehen sind, wobei jede Gruppe an Stellgliedern (13') jeweils ein jeder Reihe von Tastelementen (1) zugeordnetes Stellglied (13') aufweist.

9. Vorrichtung nach einem der Ansprüche 1 bis 8, **dadurch gekennzeichnet, dass** zumindest ein Sensor (15) zur Positions- bzw. Winkel- und Drehrichtungsbestimmung der Trägerscheiben (4) vorgesehen ist.

10. Vorrichtung nach einem der Ansprüche 1 bis 9, **dadurch gekennzeichnet, dass** eine Ausleseeinheit (17) zur Bestimmung der Drehausrichtung jedes Tastelements (1) vorgesehen ist.

11. Vorrichtung nach einem der Ansprüche 2 bis 10, **dadurch gekennzeichnet, dass** die Aufnahmevorrichtung samt Tastelementen (1) in einem Gehäuse (23) aufgenommen sind, wobei Führungsrollen (19, 20), vorzugsweise zwei untere und zwei obere Führungsrollen, zwischen dem Gehäuse (23) und den Trägerscheiben (4) und/oder einer Führungsvorrichtung (5, 14) vorgesehen sind, wobei vorzugsweise mit dem Gehäuse (23) zumindest zwei drehbar gelagerte Stützrollen (21) verbunden sind.

12. Vorrichtung nach Anspruch 11, **dadurch gekennzeichnet, dass** ein äußerer Rand der Trägerscheiben (4) bzw. ein mit den Trägerscheiben (4) drehfest verbundenes vorzugsweise ringsumflaufendes Reibelement derart angeordnet ist, dass bei Auflage der Stützrollen (21) auf einer im Wesentlichen ebenen Untergrundfläche (24) der äußere Rand (25) der Trägerscheiben (4) und/oder das ringsumflaufende Reibelement mit der Untergrundfläche (24) in Reibkontakt steht.

13. Vorrichtung nach einem der Ansprüche 1 bis 12, **dadurch gekennzeichnet, dass** die Seitenflächen (1'') jeweils gleich lange Längs- und Querkanten aufweisen.

14. Vorrichtung nach Anspruch 13, **dadurch gekennzeichnet, dass** die Tastelemente (1) aufweisenden Seitenflächen (1'') plane oder gegenüber dem Tastelement (1) konkave Grundflächen aufweisen, von welchen gegebenenfalls Tastpunkte (2) erhaben vorstehen.

## Claims

1. Device for the representation of tactile characters, in particular in braille, comprising tactile elements (1) combined in groups (1'), a tactile character in each case consisting of a matrix of tactile points (2) which can be arranged in two point columns (y) arranged next to one another and at least two point rows (x), the four possible combinations of two tactile points (2) of tactile points (2) arranged next to one another in a point row (x) being arranged on a common tactile element (1) in each case, the tactile elements (1) being substantially cuboid-shaped and each tactile element (1) having four lateral or tactile surfaces (1") which have no tactile point, a tactile point arranged on the left-hand side or right-hand side, or two tactile points (2), the individual tactile elements (1) being rotatably mounted and the tactile elements (1) that are combined in a group (1') each being mounted on a common axis of rotation (3), **characterised in that** tactile elements (1) combined in different groups (1') have different, substantially parallel axes of rotation (3), the groups of tactile elements being mounted in a substantially annular receiving device and tactile elements (1) of adjacent groups (1') of tactile elements (1), which each represent the same point row (x) of a tactile character, forming a common row of tactile elements (1), and each row of tactile elements (1) being assigned at least one actuator (13') for twisting.

2. Device according to claim 1, **characterised in that** the annular receiving device comprises two annular carrier discs (4), between which the tactile elements (1) are received, the annular receiving device preferably having radial guide elements (4a) extending in the radial direction for displaceable mounting of the tactile elements (1).

3. Device according to claim 2, **characterised in that** slot-shaped recesses are provided as radial guide elements (4a), in each case for receiving a rotational axis (3) of a group (1') of tactile elements (1).

4. Device according to any of claims 1 to 3, **characterised in that** a lower guide device (14) is provided, which displaces a plurality of groups (1') of tactile elements (1) radially inwards in a lower reading portion (L), an outer contact surface (14') preferably being formed as the lower guide device (14), by means of which the tactile elements (1) are displaced inwards.

5. Device according to any of claims 1 to 4, **characterised in that** an upper guide device (5) is provided, which displaces at least one group (1'), in particular a plurality of groups (1'), of tactile elements (1) radially outwards in an upper adjustment portion (E), the upper guide device (5) preferably being designed as an inner contact surface (5') or inner contact surfaces, by means of which the tactile elements (1) are displaced outwards, and the inner contact surfaces (5') in particular being partially formed by a plurality of preferably resiliently mounted guide elements (10).

6. Device according to any of claims 1 to 5, **characterised in that** a projection (26) is in each case arranged between two adjacent groups (1') of tactile elements (1), the projections (26) preferably being mounted in an upper adjustment portion (E) so as to be displaceable from a radially inner blocking position into a radially outer release position.

7. Device according to claim 6, **characterised in that** at least one group (1') of tactile elements is mounted in an upper adjustment portion (E) so as to be displaceable from a radially inner blocking position into a radially outer release position.

8. Device according to claim 1, **characterised in that** three groups of actuators (13') are provided which are arranged at a distance in the circumferential direction, each group of actuators (13') in each case having an actuator (13') assigned to each row of tactile elements (1).

9. Device according to any of claims 1 to 8, **characterised in that** at least one sensor (15) is provided for determining the position or angle and direction of rotation of the carrier discs (4).

10. Device according to any of claims 1 to 9, **characterised in that** a readout unit (17) is provided for determining the rotational orientation of each tactile element (1).

11. Device according to any of claims 2 to 10, **characterised in that** the receiving device, together with tactile elements (1), is accommodated in a housing (23), guide rollers (19, 20), preferably two lower and two upper guide rollers, being provided between the housing (23) and the carrier discs (4) and/or a guide device (5, 14), at least two rotatably mounted support rollers (21) preferably being connected to the housing (23).

12. Device according to claim 11, **characterised in that** an outer edge of the carrier discs (4) or a preferably circumferential friction element, which is connected to the carrier discs (4) for conjoint rotation, is arranged in such a way that, when the support rollers (21) rest on a substantially planar substrate surface (24), the outer edge (25) of the carrier discs (4) and/or the circumferential friction element is in frictional contact with the substrate surface (24).

13. Device according to any of claims 1 to 12, **characterised in that** the lateral surfaces (1") each have longitudinal and transverse edges of equal length.

14. Device according to claim 13, **characterised in that** the lateral surfaces (1") having the tactile elements (1) have base surfaces which are planar or concave with respect to the tactile element (1), from which surfaces tactile points (2) optionally protrude in a raised manner.

## Revendications

1. Dispositif pour représenter des signes palpables, en particulier en écriture Braille, avec des éléments de palpation (1) combinés en groupes (1'), où un signe palpable consiste à chaque fois en une matrice de points palpables (2), qui peuvent être disposés en deux colonnes de points (y) disposées l'une à côté de l'autre et au moins deux lignes de points (x), où les quatre combinaisons possibles de deux points palpables (2) de points palpables (2) disposés les uns à côté des autres dans une ligne de points (x) sont disposés à chaque fois sur un élément de palpation commun (1), où les éléments de palpation (1) sont sensiblement cubiques et chaque élément de palpation (1) présente quatre surfaces latérales ou de palpation (1") sans point palpable disposé à gauche ou à droite ou deux points palpables (2), où les éléments de palpation (1) individuels sont montés rotatifs et les éléments de palpation (1) combinés à chaque fois en un groupe (1') sont montés sur un axe de rotation commun (3), **caractérisé en ce que** des éléments de palpation (1) combinés dans des groupes (1') différents présentent des axes de rotation (3) différents, sensiblement parallèles, où les groupes d'éléments de palpation sont montés dans un dispositif de réception sensiblement annulaire et les éléments de palpation (1) de groupes (1') d'éléments de palpation (1) voisins qui représentent chacun la même ligne de points (x) d'un signe palpable, forment une rangée commune d'éléments de palpation (1), et à chaque rangée d'éléments de palpation (1) est associé au moins un actionneur (13') pour la déformation.

2. Dispositif selon la revendication 1, **caractérisé en ce que** le dispositif de réception annulaire comprend deux disques porteurs annulaires (4), entre lesquels les éléments de palpation (1) sont logés, où le dispositif de réception annulaire présente de préférence des éléments de guidage radiaux (4a) s'étendant dans la direction radiale pour le montage déplaçable des éléments de palpation (1).

3. Dispositif selon la revendication 2, **caractérisé en ce que** des évidements en forme de fente sont prévus comme éléments de guidage radiaux (4a), à chaque fois pour recevoir un axe de rotation (3) d'un groupe (1') d'éléments de palpation (1).

4. Dispositif selon l'une des revendications 1 à 3, **caractérisé en ce qu'**il est prévu un dispositif de guidage inférieur (14) qui déplace radialement vers l'intérieur plusieurs groupes (1') d'éléments de palpation (1) dans une section de lecture inférieure (L), où une surface de contact externe (14') avec laquelle les éléments de palpation (1) sont déplacés vers l'intérieur est de préférence conçue comme dispositif de guidage inférieur (14).

5. Dispositif selon l'une des revendications 1 à 4, **caractérisé en ce qu'**il est prévu un dispositif de guidage supérieur (5) qui déplace radialement vers l'extérieur au moins un groupe (1'), en particulier plusieurs groupes (1'), d'éléments de palpation (1) dans une section de réglage supérieure (E), où de préférence le dispositif de guidage supérieur (5) est conçu sous forme de surface(s) de contact intérieure(s) (5') avec lesquelles les éléments de palpation (1) sont déplacés vers l'extérieur, et en particulier les surfaces de contact intérieures (5') sont partiellement formées par plusieurs éléments de guidage (10) de préférence montés à ressort.

6. Dispositif selon l'une des revendications 1 à 5, **caractérisé en ce qu'**une traverse (26) est disposée entre deux groupes (1') voisins d'éléments de palpation (1), où de préférence les traverses (26) sont montées déplaçables dans une section de réglage supérieure (E) d'une position de blocage située radialement à l'intérieur à une position de libération située radialement à l'extérieur.

7. Dispositif selon la revendication 6, **caractérisé en ce qu'**au moins un groupe (1') d'éléments de palpation est monté déplaçable dans une section de réglage supérieure (E) d'une position de blocage située radialement à l'intérieur à une position de libération située radialement à l'extérieur.

8. Dispositif selon la revendication 1, **caractérisé en ce qu'**il est prévu trois groupes d'actionneurs (13') espacés dans le sens circonférentiel, où chaque groupe d'actionneurs (13') présente à chaque fois un actionneur (13') associé à chaque rangée d'éléments de palpation (1).

9. Dispositif selon l'une des revendications 1 à 8, **caractérisé en ce qu'**au moins un capteur (15) pour déterminer la position ou l'angle et le sens de rotation des disques porteurs (4) est prévu.

10. Dispositif selon l'une des revendications 1 à 9, **caractérisé en ce qu'**une unité de lecture (17) pour déterminer l'orientation en rotation de chaque élément de palpation (1) est prévue.

11. Dispositif selon l'une des revendications 2 à 10, **caractérisé en ce que** le dispositif de réception ainsi que les éléments de palpation (1) sont logés dans un boîtier (23), où des galets de guidage (19, 20), de préférence deux galets de guidage inférieurs et deux galets de guidage supérieurs, sont prévus entre le boîtier (23) et les disques porteurs (4) et/ou un dispositif de guidage (5, 14), où de préférence au moins deux galets d'appui (21) montés à rotation sont reliés au boîtier (23).

12. Dispositif selon la revendication 11, **caractérisé en ce qu'**un bord extérieur des disques porteurs (4) ou un élément de frottement de préférence circonférentiel lié aux disques porteurs (4) de manière solidaire en rotation est agencé de telle sorte que lorsque les galets de support (21) reposent sur une surface de fond (24) sensiblement plane le bord extérieur (25) des disques porteurs (4) et/ou l'élément de frottement circonférentiel est en contact de frottement avec la surface de fond (24).

13. Dispositif selon l'une des revendications 1 à 12, **caractérisé en ce que** les surfaces latérales (1") présentent à chaque fois des arêtes longitudinales et transversales de même longueur.

14. Dispositif selon la revendication 13, **caractérisé en ce que** les surfaces latérales (1") comportant des éléments de palpation (1) présentent des surfaces de fond planes ou concaves par rapport à l'élément de palpation (1), depuis lesquelles font saillie éventuellement des points de palpation (2).
